# EUROPEAN PATENT APPLICATION

(11) **EP 4 154 708 A1**
(43) Date of publication of application: **29.03.2023**
(21) Application number: 21933100.6
(22) Date of filing: 26.03.2021
(51) Int. Cl.: A01M 1/04, A01M 1/08

(54) **INSECT TRAP**

(71) Applicant: Hikari Bio Inc., Takamatsu-shi, Kagawa, 761-8042 (JP)
(72) Inventor: HIROTA Norifumi, Takamatsu-shi, Kagawa 761-8042 (JP)
(74) Representative: Wilson Gunn
(86) International application number: PCT/JP2021/012895
(87) International publication number: WO 2022/201495

(57) **Abstract**

Provided is an insect trap that does not attract noctuid moths and stink bugs to suppress noctuid moths and stink bugs from doing harm to crops . To attain the above object, an insect trap according to the present invention includes a light source configured to emit light that causes phototaxis in insects, and the light source has an emission peak at an emission wavelength of between 600 nm or more and 660 nm or less.

## Description

### Technical Field

The present invention relates to an insect trap for exterminating pests, which is used in farms to reduce feeding damage to cultivated crops caused by pests.

### Background Art

A typical example of a means for pest control in a farm is pesticide spraying. However, insects have been becoming resistant to pesticides, and efficacy of the pesticide spraying has thus been significantly decreasing in recent years. Therefore, pest control heavily dependent on the pesticide needs to be reviewed.

A pest control method of attracting and trapping pests using light has been gaining popularity as one of pest control strategies . The present inventor has proposed an insect trap using, as a light source for attracting pests, one having a maximum emission peak at an emission wavelength of around 560 nm or around 565 nm.

### Patent Document 1: JP 2020-089327A

### Disclosure of the Invention

### Problems to be Solved by the Invention

The conventional insect trap is suitably used in trapping whiteflies which have recently posed a problem as an insect vector of tomato yellow leaf curl virus. However, light sources used in insect traps can disadvantageously attract noctuid moths such as *Spodoptera litura,* stink bugs such as brown-winged stink bugs which are roaming in distant places, unintentionally inviting them over to a farm. The noctuid moths and stink bugs having a body length significantly larger than whiteflies having a body length of about 1 mm are difficult to trap with an insect trap. When the noctuid moths and stink bugs unintentionally invited from a distant place are left untrapped, they do harm to crops to affect crop productivity.

### Means for Solving the Problems

The present invention has been made to solve the above problem, and an object thereof is to provide an insect trap that uses a light source functioning as an attracting light source for whiteflies and functioning as a repellent light source for noctuid moths and stink bugs.

To attain the above object, there is provided an insect trap including a light source emitting light that causes phototaxis in insects, wherein the light source has an emission peak at an emission wavelength of between 600 nm or more and 650 nm or less.

Further, there is provided an insect trap including a light source configured to emit light that causes phototaxis in insects, wherein the light source has a first emission peak at an emission wavelength of around 545 nm, a second emission peak at an emission wavelength of around 585 nm, and a third emission peak at an emission wavelength of between 600 nm or more and 660 nm or less.

In the insect trap according to the present invention, the light source is constituted by a fluorescent lamp with a coating film applied thereto.

The insect trap according to the present invention includes : a mortar-shaped reflection part disposed vertically below the light source and configured to reflect the light emitted from the light source vertically upward; a cylindrical part disposed vertically below the mortar-shaped reflection part so as to extend from the mortar-shaped reflection part; a fan configured to generate an airflow in a direction sucking air from the mortar-shaped reflection part into the cylindrical part; and a net disposed vertically below the fan to trap insects.

In the insect trap according to the present invention, the mortar-shaped reflection part has a coating film with a color similar to a hue within the range of 10YR to 10Y in the Munsell color system.

In the insect trap according to the present invention, a mesh having a mesh size less than 5 mm is disposed in an insect suction space of the mortar-shaped reflection part.

### Advantageous Effects of the Invention

The light source of the insect trap according to the present invention has, as its spectral characteristics, the third emission peak at an emission wavelength of between 600 nm or more and 660 nm or less which repels noctuid moths and stink bugs. Thus, it is possible to avoid a risk of attracting noctuid moths and stink bugs from a distant place to thereby suppress noctuid moths and stink bugs from doing harm to crops.

Further, the light source of the insect trap according to the present invention has, its spectral characteristics, the first emission peak at an emission wavelength of around 545 nm and the second emission peak at an emission wavelength of around 585 nm to attract target pests such as whiteflies, thrips, aphids (winged), leafminer flies, and flies, and the third emission peak at an emission wavelength of between 600 nm or more and 660 nm or less which repels noctuid moths and stink bugs. With the thus configured insect trap, it is possible to attract and trap target pests such as whiteflies and, further, it is possible to avoid a risk of attracting noctuid moths and stink bugs from a distant place to thereby suppress noctuid moths and stink bugs from doing harm to crops.

### Brief Description of the Drawings

FIG. 1 is a view for schematically explaining an insect trap 100 according to a first embodiment of the present invention.
FIG. 2 is a view illustrating a mesh 140 disposed in a suction space between a mortar-shaped reflection part 160 and a conical part 150.
FIG. 3 is a spectral characteristic view of a light source 200 used in the insect trap 100 according to the embodiment of the present invention.
FIG. 4 is a view for explaining a configuration for verifying the effects of the light source 200 according to the embodiment of the present invention.
FIG. 5 is a view illustrating the wavelength dependency of attracting performance to brown-winged stink bugs.
FIG. 6 is a view illustrating the measurement result of the retinal potential of the brown-winged stink bugs.
FIG. 7 is a view illustrating the wavelength dependency of attracting performance.

### Best Mode for Carrying Out the Invention

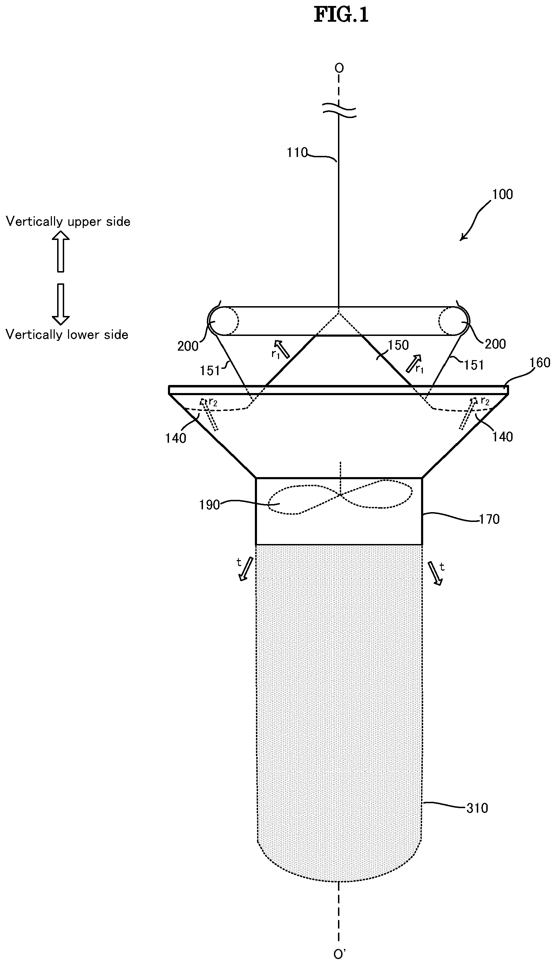

Hereinafter, embodiments of the present invention will be described with reference to the drawings. FIG. 1 is a view for schematically explaining an insect trap 100 according to a first embodiment of the present invention.

A light source 200 according to the present invention is assumed to cause basically positive phototaxis in target pests such as white flies, thrips, aphids (winged), leafminer flies, and flies to thereby attract them. On the other hand, the light source 200 has spectral characteristics causing negative phototaxis in noctuid moths and stink bugs.

The insect trap 100 using this light source 200 is assumed to be hung by, e.g., a hanging wire 110 in practical use. The insect trap 100 has a substantially symmetric shape with respect to a virtual axis O-O' along which the hanging wire 110 extends. For example, the light source 200 has a substantially donut shape.

A conical part 150 hangs from the hanging wire 110. Fixing fittings 151 extend upward from three locations on the upper side of the peripheral surface of the conical part 150 to support the light source 200.

The number of the fixing fittings 151 to be provided on the peripheral surface of the conical part 150 is not limited to three.

The light source 200 is a fluorescent tube on the surface of which a coating film is formed. The fluorescent tube emits light using a ballast. The fluorescent tube used for the light source 200 is preferably any of a daylight fluorescent tube (having a color temperature of 6500 K to 6700 K), a white light fluorescent tube (having a color temperature of 4900 K to 5100 K), and a bulb color fluorescent tube (having a color temperature of 2800 K to 3000 K) . When emitting, the light source 200 functions as a light source for attracting target pests (whiteflies, etc.) . On the other hand, the light source 200 has spectral characteristics functioning a repellent light for noctuid moths and stink bugs. Although an annular fluorescent lamp is used as the light source 200 in the present embodiment, a straight tube lamp, a twin-type fluorescent lamp, and the like may be used.

The coating film formed on the surface of the fluorescent tube functions as an optical filter to block emission light of a shorter wavelength than around 500 nm and to allow emission light of a longer wavelength than around 500 nm to efficiently pass therethrough. Such a coating film is formed by applying a mixture of hydroxyl group-containing acrylic resin and benzimidazolone and a mixture of epoxy resin, clear, curing agent (isocyanate compound), and thinner onto the fluorescent tube.

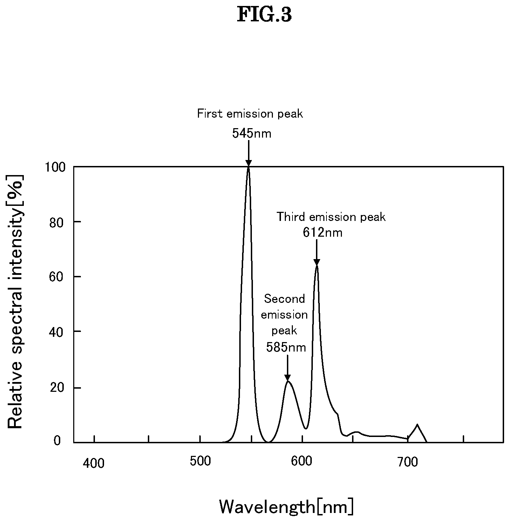

FIG. 3 illustrates the spectral characteristics of the thus configured light source 200. In FIG. 3, since the above-described coating film is formed on the surface of the fluorescent tube, light of a shorter wavelength than around 500 nm is cut. The light source 200 has a first emission peak at an emission wavelength of around 545 nm and a second emission peak at an emission wavelength of around 585 nm to attract target pests such as white flies . It is considered that the fact that the average value of the above first and second emission peaks is 565 nm is the reason why the light from the light source 200 effectively functions as an attracting light for attracting target pests such as whiteflies.

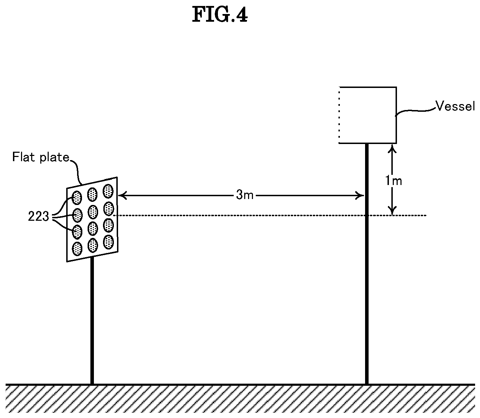

The following describes a verification made on the attraction effect on the target pests. FIG. 4 is a view for explaining a configuration for verifying the effect of the light source 200 according to the embodiment of the present invention. In the verification illustrated in FIG. 4, the attraction effect on greenhouse whiteflies was examined using LED devices with various wavelengths.

In this verification, 12 LED devices 223 were fixed to a flat plate and then covered with a transparent wrap sprayed with a sticky material. The number of trapped insects attracted to the LED devices 223 and stuck to the wrap was counted.

A vessel in which 200 greenhouse whitefly adults were put was installed in a location 1 m above and 3 m distant from the LED devices 223. A mesh material, through which the greenhouse whitefly adults were able to freely enter or exit from the vessel, was provided to one surface of the vessel. The greenhouse whitefly adults employed had been reared beforehand. The one surface faced the light source so as to allow the greenhouse whitefly adults to fly only from the light source side.

The greenhouse whitefly adults that approached the light source were stuck to the sprayed sticky material. The number of trapped insects was counted four hours after the installation of the vessel and light source. The experiment was carried out in a dark room at a temperature of 25°C. The results are shown in Table 1.

**[Table 1]**

| LED peak wavelength [nm] | Number of trapped insects | Ratio when number of trapped insects at 565 nm is taken as 1 |
|---|---|---|
| 470 | 3 | 0.02 |
| 500 | 18 | 0.12 |
| 525 | 76 | 0.49 |
| 565 | 154 | 1 |
| 590 | 74 | 0.48 |
| 612 | 84 | 0.55 |
| 644 | 50 | 0.32 |

As shown in Table 1, the number of trapped insects was largest when the peak wavelength of the light source 200 was 565 nm. Thus, normalization was made with the number of trapped insects at this peak wavelength taken as 1.

As is clear from Table 1, the embodiment using the light source 200 according to the present invention having a peak wavelength of 565 nm exhibits the best results. In the present embodiment, an effect equivalent to that obtained at 565 nm is achieved with the average value between the first emission peak (around 545 nm) and the second emission peak (around 585 nm).

In the description of the present specification, reference to, e.g., "565 nm" of the peak wavelength of the light source 200 includes a range from about -5 nm to +5 nm of "565 nm". That is, according to Table 1, it can be said that the number of trapped insects is largest when the emission wavelength of the light source 200 has a maximum emission peak at an emission wavelength of around 565 nm (565 nm ± 5 nm) . In the present specification, the wavelength range is specified to be a designated wavelength with a margin of ± 5 nm. This is because reginal diversity exists even in the same type of insects, and thus there is a regional difference in the insect trapping effect of the light source with respect to the wavelength.

Further, in the present embodiment, the attraction effect on whiteflies around 565 nm previously mentioned is achieved with the average value between the first emission peak (around 545 nm) and the second emission peak (around 585 nm) ; however, the present invention is not limited to this. For example, in a light source with spectral characteristics having two local emission peaks at around a wavelength α [nm] and around a wavelength β [nm], the α and β may be selected so as to satisfy (α + β)/2 = 565.

As described above, the light source 200 of the insect trap 100 according to the present invention has, as its spectral characteristics, the first emission peak at an emission wavelength of around 545 nm and the second emission peak at an emission wavelength of around 585 nm to attract target pests such as whiteflies, thrips, aphids (winged), leafminer flies, and flies, whereby target pests can be trapped effectively.

Referring back to FIG. 3, the light source 200 according to the present invention has a third emission peak (612 nm in the present embodiment) at an emission wavelength of between 600 nm or more and 660 nm or less to thereby function as a repellent light source for noctuid moths and stink bugs.

Thus, the light source 200 of the insect trap 100 according to the present invention has, as its spectral characteristics, an emission peak at an emission wavelength of between 600 nm or more and 660 nm or less which repels noctuid moths and stink bugs, so that it is possible to avoid a risk of attracting noctuid moths and stink bugs from a distant place to thereby suppress noctuid moths and stink bugs from doing harm to crops.

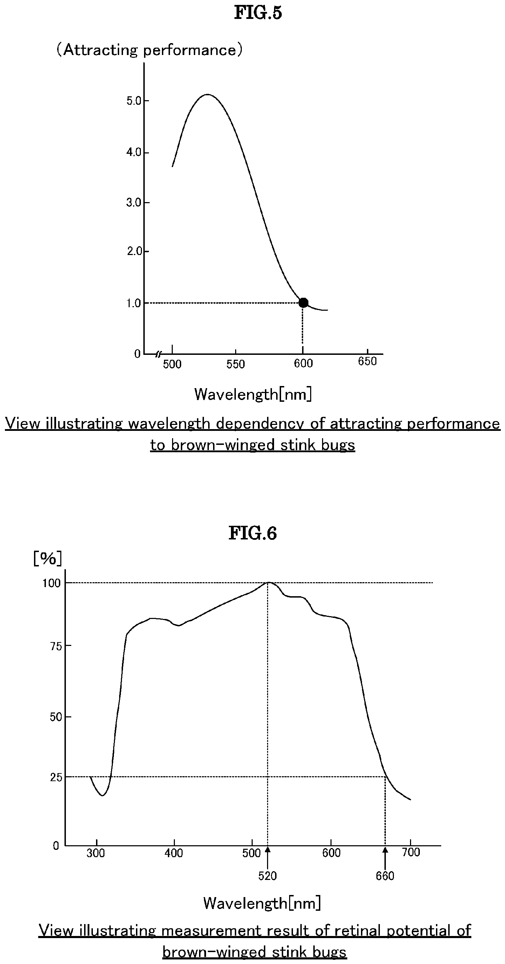

The following describes a verification of the fact that light with spectral characteristics having an emission peak at an emission wavelength of between 600 nm or more and 660 nm or less functions as a repellent light for noctuid moths and stink bugs. FIG. 5 is a view illustrating the wavelength dependency of attracting performance to brown-winged stink bugs.

In this verification, a plurality of brown-winged stink bugs were prepared on a petri dish, a predetermined irradiation area was formed on the petri dish with light of various wavelengths, and the number of brown-winged stink bugs attracted to the irradiation area was counted as data illustrated in FIG. 5. The index of the attracting performance on the vertical axis in FIG. 5 was normalized by 600 nm. The horizontal axis of FIG. 5 indicates a wavelength. The result revealed that brown-winged stink bugs were strongly attracted to a light in the wavelength range equal to or less than about 550 nm and that the attracting performance became weak when the wavelength exceeded 550 nm.

Based on the above result of the wavelength dependency of the attracting performance to brown-winged stink bugs, the lower limit of the wavelength of the third emission peak of the light source 200 according to the present invention was set to 600 nm.

Then, the retinal potential of the brown-winged stink bug was measured to examine the wavelength range sensed by the brown-winged stink bugs. In this measurement, an electrode was set to the eyes of the brown-winged stink bugs, and the potential appearing at the electrode was measured with light of various wavelengths irradiated. FIG. 6 is a view illustrating the measurement result of the retinal potential of the brown-winged stink bugs. As a result of the measurement, the retinal potential had a peak at 520 nm, so that the data was normalized by 520 nm in FIG. 6.

The measurement result of the retinal potential revealed that the brown-winged stink bugs that were able to sense (see) the light of a wavelength equal to or more 660 nm was only 1/4 or less of that at the peak time. Based on the measurement result of the retinal potential, the upper limit of the wavelength of the third emission peak of the light source 200 according to the present invention was set to 660 nm.

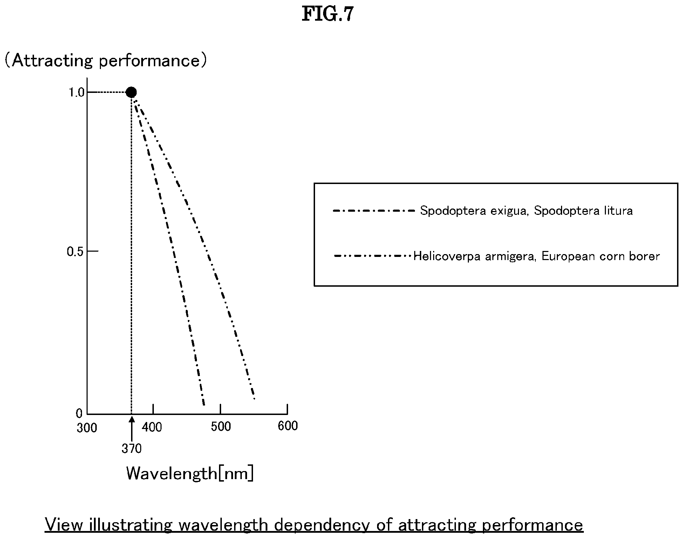

Then, various fluorescent lamps having mutually different maximum emission peaks were used to examine the attracting performance to *Spodoptera exigua,* Spodoptera litura, *Helicoverpa armigera,* and *European corn borer.* The result is illustrated in FIG. 7. The data illustrates in FIG. 7 was normalized based on the result obtained by use of a fluorescent lamp having the maximum emission peak at 370 nm.

In FIG. 7, the long dashed dotted line indicates a trend in the attracting performance to *Spodoptera exigua* and *Spodoptera litura* and indicates a trend in the attracting performance to *Helicoverpa armigera* and *European corn borer.* The result revealed that the light equal to or more than 600 nm in wavelength had almost no attracting performance and functioned as a repellent light for the noctuid moths. Based also on this result, the lower limit of the wavelength of the third emission peak of the light source 200 according to the present invention was set to 600 nm.

As described above, the light source 200 of the insect trap 100 according to the present invention has, as its spectral characteristics, the third emission peak at an emission wavelength of between 600 nm or more and 660 nm or less which repels noctuid moths and stink bugs. According to the insect trap 100 having the thus configured light source 200, it is possible to avoid a risk of attracting noctuid moths and stink bugs from a distant place to thereby suppress noctuid moths and stink bugs from doing harm to crops.

In the insect trap 100, not-shown support poles extend from three locations at the bottom portion of the conical part 150 and connect the conical part 150 to a mortar-shaped reflection part 160. Further, a cylindrical part 170 extends vertically downward from the bottom portion of the mortar-shaped reflection part 160.

The space (suction space) between the bottom potion of the conical part 150 and the mortar-shaped reflection part 160, other than a portion where the support poles are present, serves as a gap, allowing pests to be sucked and light emitted from the light source 200 to travel downward therethrough.

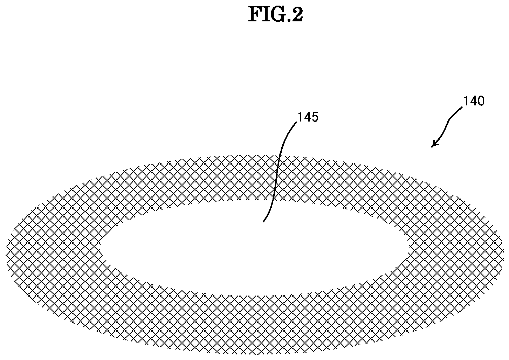

A grid member having a mesh size less than 5 mm is disposed in the suction space as the gap formed between the mortar-shaped reflection part 160 and the conical part 150. In the present embodiment, a mesh 140 is used as the grid member. The mesh 140 has a hole part 145 formed along the outer peripheral edge of the conical part 150. FIG. 2 is a view illustrating the mesh 140 disposed in the suction space between the mortar-shaped reflection part 160 and the conical part 150.

If the mesh 140 is not provided, honeybees or bumblebees, which are used for cross-breeding of crops, are trapped in a trapping net 310 through the suction space, which may affect the cross-breeding. In the insect trap 100 according to the present invention, the mesh 140 having a mesh size less than 5 mm is disposed in the suction space to prevent bees having a body size larger than that of target pests from passing through the suction space and thus being trapped in the trapping net 310. Thus, the mesh 140 functions as a protective net for bees.

The mortar-shaped reflection part 160, conical part 150, and cylindrical part 170 are made of iron or stainless steel and are preferably applied with a coating film having weather resistance.

The mesh 140 preferably has a color similar to a hue within the range of 10YR to 10Y in the Munsell color system.

In particular, the mortar-shaped reflection part 160 and conical part 150 preferably have a coating film with a color similar to a hue within the range of 10YR to 10Y in the Munsell color system. The color similar to a hue within the range of 10YR to 10Y in the Munsell color system corresponds to a color ranging from an intermediate color between orange and yellow to yellow.

The insect trap 100 according to the present invention uses the light source 200 having two local emission peaks of the first emission peak at an emission wavelength of around 545 nm and the second emission peak at an emission wavelength of around 585 nm to attract and trap target pests such as white flies, thrips, aphids (winged), leafminer flies, and flies. Further, the insect trap 100 is provided with the mortar-shaped reflection part 160 and conical part 150 having a coating film with a color similar to a hue within the range of 10YR to 10Y in the Munsell color system and efficiently attracts the target pests by a synergetic effect with the above light source 200 to thereby improve the probability of trapping/exterminating the target pests and increase the production amount of crops.

The cylindrical part 170 has inside thereof a fan 190 driven into rotation by a not-shown motor. When the fan 190 rotates, an airflow for sucking air in the mortar-shaped reflection part 160 vertically downward is generated at the mesh 140 between the conical part 150 and the mortar-shaped reflection part 160.

Pests attracted to the light source 200 are guided to the trapping net 310 through the cylindrical part 170 by the airflow generated by the fan 190 and flowing in a direction sucking air from the opening of the mortar-shaped reflection part 160 into the cylindrical part 170.

When the light source 200 emits light, the slope of the conical part 150 positioned vertically downward of the light source 200 functions as a reflecting surface to form reflected light r₁.

Further, when the light source 200 emits light, the inner surface of the mortar-shaped reflection part 160 positioned vertically downward of the light source 200 functions as a reflecting surface to form reflected light r₂.

Further, when the light source 200 emits light, illumination light t is emitted from the lower portion of the cylindrical part 170. Pests in the lower portion of the mortar-shaped reflection part 160 are also attracted to the illumination light t as an attraction light source, sucked by the airflow generated by the fan 190, and eventually trapped.

Further, the coating film, which is applied to the mortar-shaped reflection part 160 and conical part 150, having a color similar to a hue within the range of 10YR to 10Y in the Munsell color system acts synergistically with the light source 200 to thereby efficiently attract the target pests.

Thus, in the insect trap 100 according to the present invention, light from the light source 200 also reaches the lower-side area through the long transparent cylindrical part 180, so that the pests in this area are attracted to the light source 200, trapped, and exterminated, thereby allowing further improvement in probability of trapping/exterminating the target pests, which can lead to a reduction in damage to crops such as fruits and vegetables due to pests.

Further, the illumination light t gives crops the same effect as an increase in sunshine duration and can thus contribute to an increase in the production amount of crops.

Although the light source 200 has substantially the donut shape in the present embodiment, the shape of the light source 200 is not limited to this in the insect trap 100 according to the present invention.

In the insect trap 100 according to the present invention, the mesh size of the trapping net 310 is preferably in the range of about 0.1 mm to 0.3 mm. Further, trapping nets 310 having different mesh sizes may be used in the form of double layers.

The mesh size of the trapping net 310 for trapping thrips is preferably 0.13 mm. The mesh size of the trapping net 310 for trapping pests other than the thrips is preferably about 0.2 mm × 0.4 mm.

For example, it is preferable to use trapping nets 310 having a mesh size of about 0.1 mm to 0. 3 mm and a mesh size of about 5 mm in the form of double layers. Even when a comparatively large-sized insect is trapped, it cannot bite and tear a coarse portion, so that the trapped pests will not escape from the net, thereby allowing further improvement in probability of exterminating the target pests, which can lead to a reduction in damage to crops such as fruits and vegetables from pests.

In the present embodiment, the insect trap 100 is hung by the hanging wire 110, and the virtual axis O-O' along which the hanging wire 110 extends is parallel to the vertical direction. However, depending on the crops such as fruits and vegetables, the insect trap 100 may be set such that the virtual axis O-O' is parallel to the horizontal direction.

As described above, the light source 200 of the insect trap 100 according to the present invention has, as its spectral characteristics, the first emission peak at an emission wavelength of around 545 nm and the second emission peak at an emission wavelength of around 585 nm to attract target pests such as whiteflies, thrips, aphids (winged), leafminer flies, and flies, and the third emission peak at an emission wavelength of between 600 nm or more and 660 nm or less which repels noctuid moths and stink bugs. According to the thus configured insect trap 100 of the present invention, it is possible to attract and trap target pests such as whiteflies and, further, it is possible to avoid a risk of attracting noctuid moths and stink bugs from a distant place to thereby suppress noctuid moths and stink bugs from doing harm to crops.

### Industrial Applicability

A light source used in the conventional insect trap can disadvantageously attract noctuid moths such as *Spodoptera litura,* stink bugs such as brown-winged stink bugs which are roaming in distant places, unintentionally inviting them over to a farm. The noctuid moths and stink bugs are difficult to trap with an insect trap, with the result that they do harm to crops to affect crop productivity.

To cope with this, in the present invention, the light source of the insect trap has, as its spectral characteristics, an emission peak at an emission wavelength of between 600 nm or more and 660 nm or less which repels noctuid moths and stink bugs, so that it is possible to avoid a risk of attracting noctuid moths and stink bugs from a distant place to thereby suppress noctuid moths and stink bugs from doing harm to crops. This can improve crop productivity and thus has high industrial applicability.

### Reference Signs List

- 100:: Insect trap
- 110:: Hanging wire
- 140:: Mesh
- 145:: Hole part
- 150:: Conical part
- 151:: Fixing fitting
- 160:: Mortar-shaped reflection part
- 170:: Cylindrical part
- 190:: Fan
- 200:: Light source
- 223:: LED device
- 310:: Trapping net

## Claims

1. An insect trap **characterized by** comprising a light source configured to emit light that causes phototaxis in insects, wherein
the light source has an emission peak at an emission wavelength of between 600 nm or more and 660 nm or less.

2. An insect trap **characterized by** comprising a light source configured to emit light that causes phototaxis in insects, wherein
the light source has a first emission peak at an emission wavelength of around 545 nm, a second emission peak at an emission wavelength of around 585 nm, and a third emission peak at an emission wavelength of between 600 nm or more and 660 nm or less.

3. The insect trap according to claim 1 or 2, **characterized in that**
the light source is constituted by a fluorescent lamp applied with a coating film thereon.

4. The insect trap according to any one of claims 1 to 3, **characterized by** comprising:
a mortar-shaped reflection part disposed vertically below the light source and configured to reflect the light emitted from the light source vertically upward;
a cylindrical part disposed vertically below the mortar-shaped reflection part so as to extend from the mortar-shaped reflection part;
a fan configured to generate an airflow in a direction sucking air from the mortar-shaped reflection part into the cylindrical part; and
a net disposed vertically below the fan to trap insects.

5. The insect trap according to claim 4, **characterized in that**
the mortar-shaped reflection part has a coating film with a color similar to a hue within the range of 10YR to 10Y in the Munsell color system.

6. The insect trap according to claim 4 or 5, **characterized in that**
a mesh having a mesh size less than 5 mm is disposed in an insect suction space of the mortar-shaped reflection part.
